# EUROPEAN PATENT SPECIFICATION

(11) **EP 4 475 582 B1**
(45) Date of publication and mention of the grant of the patent: **25.02.2026**
(21) Application number: 22924897.6
(22) Date of filing: 16.03.2022
(51) Int. Cl.: H04W 4/90, H04W 4/021, H04W 4/06, H04W 16/26, H04W 64/00, H04W 84/04, H04W 84/06, H04W 84/00

(54) **EMERGENCY INFORMATION DISTRIBUTION BY MOBILE STATION**
VERTEILUNG VON NOTFALLINFORMATIONEN DURCH EINE MOBILSTATION
DISTRIBUTION D'INFORMATIONS D'URGENCE PAR STATION MOBILE

(30) Priority: 03.02.2022 JP 2022015791
(43) Date of publication of application: 11.12.2024
(73) Proprietor: Rakuten Mobile, Inc., Tokyo 158-0094 (JP)
(72) Inventor: AOYAGI, Kenichiro, Tokyo 158-0094 (JP); MUHAMMAD, Awn, Tokyo 158-0094 (JP); SHETE, Pankaj, Tokyo 158-0094 (JP)
(74) Representative: Betten & Resch
(86) International application number: PCT/JP2022/012047
(87) International publication number: WO 2023/148991

(56) References cited:
- EP-A1- 1 739 868
- WO-A1-2012/025920
- JP-A- 2014 107 586
- JP-A- 2014 183 419
- JP-A- 2016 178 522
- JP-A- 2021 530 135
- JP-A- H0 993 653

## Description

### BACKGROUND OF THE INVENTION

### 1. Field of the Invention

The present disclosure relates to communication control technology in wireless communication system.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for portable communication devices such as smartphones and cell phones (hereinafter collectively referred to as communication device(s)) are usually constructed by communication cells (hereinafter referred to as terrestrial communication cell(s) or fixed communication cell(s)) provided by base stations statically installed on the ground (hereinafter referred to as terrestrial base station(s) or fixed base station(s)). However, mobile communication cannot be performed outside fixed communication cells, and the quality of mobile communications might be low depending on time and/or place even within fixed communication cells.

To solve these problems, moving stations are being considered to supplement the fixed communication cells provided by the fixed base stations. Possible moving stations are assumed to be something like a communication satellite that itself functions as a base station (hereinafter referred to as a moving base station) or something like a repeater that communicates with an existing fixed base station to expand an existing fixed communication cell (hereinafter referred to as a relay station).

Patent Literature 1: JP-A-2006-352894

EP 1 739 868 A1 discloses: A broadcast receiving system capable of keeping low the power consumption of a mobile station having a broadcast receiving unit for receiving an irregular broadcast is realized. A broadcast station transmits a broadcast notice for notifying that predefined contents will be broadcasted. The broadcast notice is transmitted to the mobile station through a relay apparatus and a mobile basestation. The mobile station receives the broadcast notice from the mobile basestation by a communication channel commonly used by mobile stations in the mobile coverage. The mobile station is set to a state capable of receiving the broadcast.

WO 2012/025920 A1 discloses: A method of allocating at least one mobile repositionable base station for broadcasting. The method comprises attaching a plurality of monitoring units to a plurality of mobile repositionable base stations, monitoring a geographic location of the plurality of mobile repositionable base stations, receiving a broadcasting request comprising broadcasting content and at least one target area, selecting a group from the plurality of mobile repositionable base stations according to a match between the at least one target area and the geographic location, and forwarding the group to at least one network controller to allow broadcasting the broadcasting content via members in the group.

### SUMMARY OF THE INVENTION

The inventor recognized the issue that moving stations can move between different emergency information distribution areas, while fixed base stations, which are stationarily installed on the ground, statically belong to specific emergency information distribution areas. In conventional wireless communication standards represented by 5G, emergency information distribution cannot be appropriately performed by such moving stations.

The present disclosure was made in consideration of this situation, and its purpose is to provide a communication control apparatus etc. that can appropriately perform emergency information distribution by a moving station.

The present invention is defined in the independent claims. The dependent claims define embodiments of the invention.

Accordingly, emergency information distribution by the moving station can be appropriately performed based on the estimation result of the emergency information distribution area where the moving station is located.

In addition, any combination of the above components, and any conversion of the expression of the present disclosure among methods, devices, systems, recording media, computer programs and the like are also encompassed within this disclosure.

According to the present disclosure, emergency information distribution by a moving station can be appropriately performed.

### BRIEF DESCRIPTION OF THE DRAWINGS

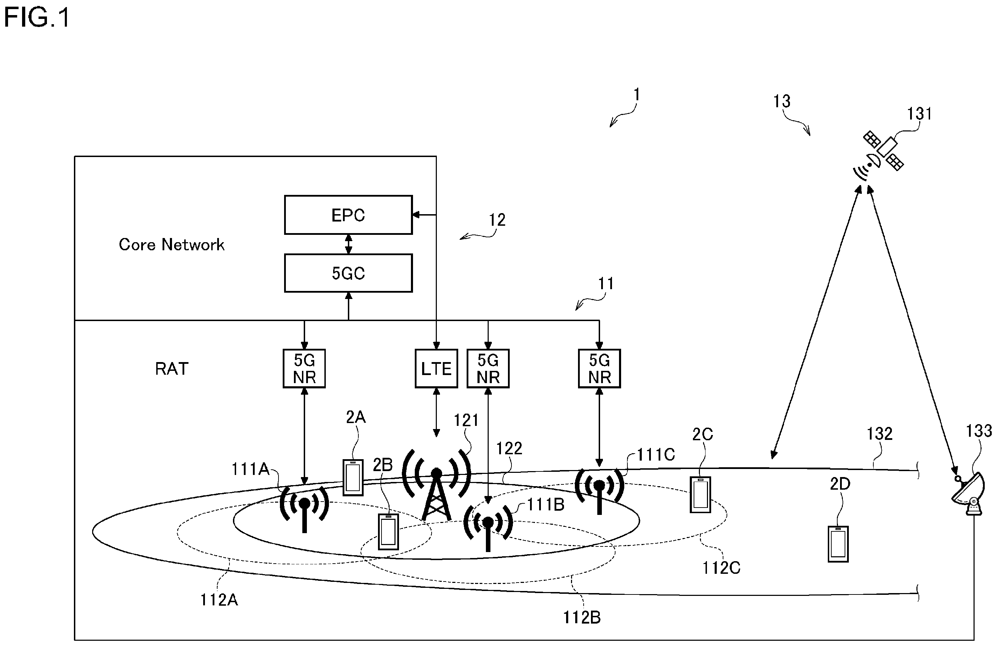

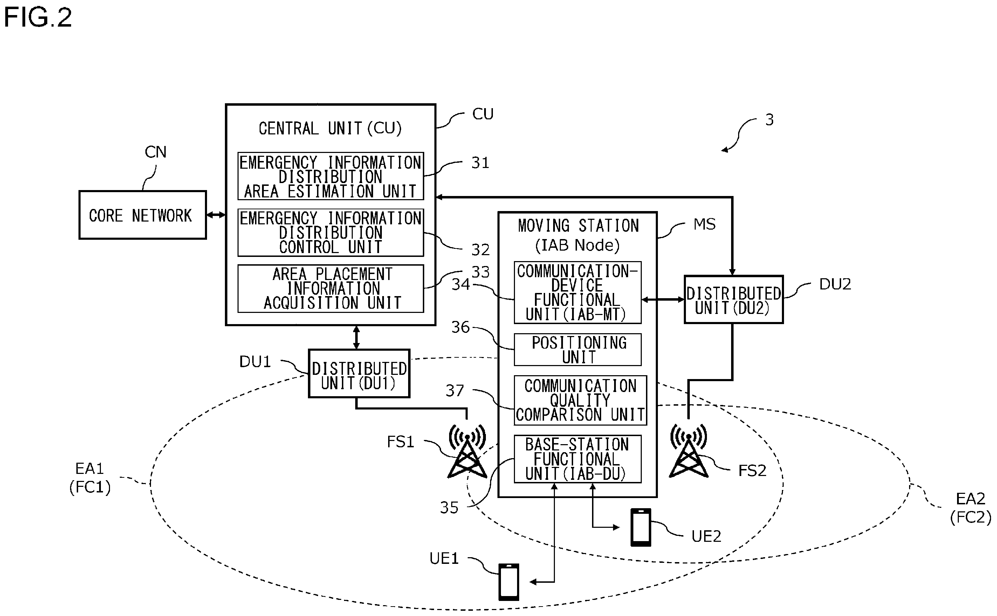

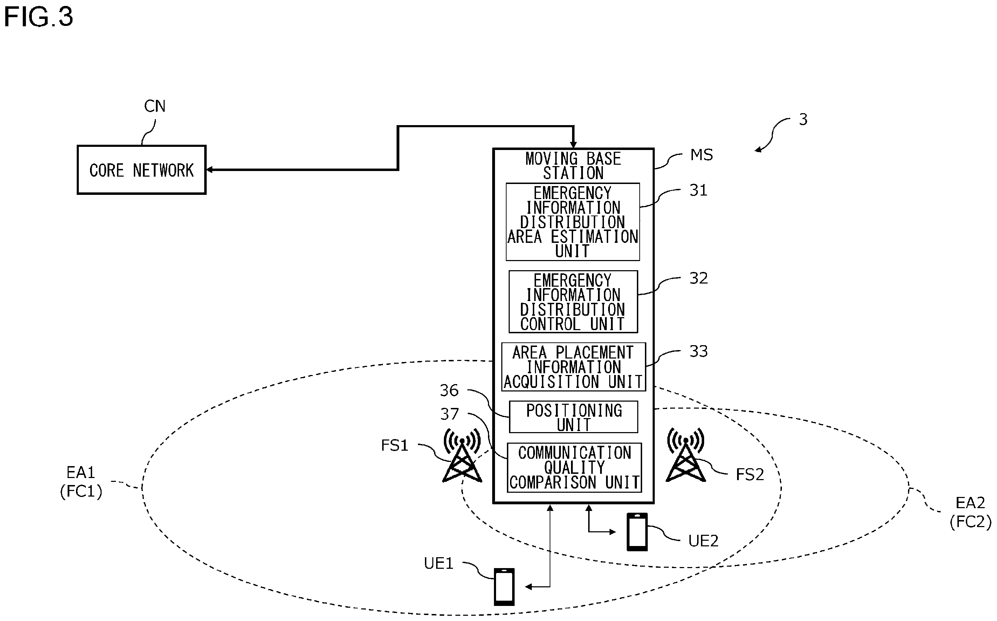

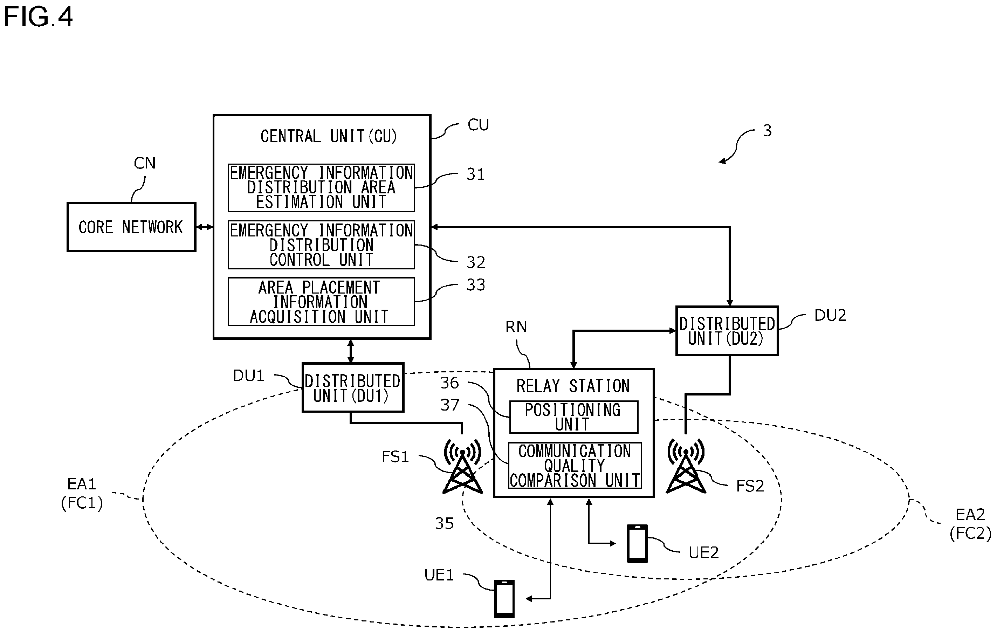

Figure 1 schematically shows the overview of a wireless communication system to which the communication control apparatus is applied. Figure 2 is a functional block diagram of the communication control apparatus. Figure 3 is a functional block diagram of the communication control apparatus. Figure 4 is a functional block diagram of the communication control apparatus.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communication devices or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 comprises a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality etc., under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft etc. with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is comprising communication satellites 131 as a non-terrestrial base station or a satellite base station, and the terrestrial network TN, which is comprising terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 etc. through the gateway 133.

Satellite communication by communication satellites 131 is mainly used for covering areas with no or few terrestrial base stations such as 5G base stations 111 and 4G base stations 121 etc. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D etc. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft flying in stratosphere or other lower (e.g. about 20 km above the ground) atmosphere may be used as a non-terrestrial base station in addition to or instead of the communication satellite 131.

As shown in Figure 1, the wireless communication system 1 is usually constructed by the terrestrial communication cells 112, 122 (hereinafter referred to as fixed communication cells FC) provided by terrestrial base stations 111, 121 stationarily installed on the ground (hereinafter referred to as fixed base stations FS). However, mobile communication cannot be performed outside fixed communication cells FC, and the quality of mobile communications might be low depending on time and/or place even within fixed communication cells FC. Although the wireless communication system 1 can also include the satellite communication system 13 that uses the communication satellite 131 as a non-terrestrial base station or moving base station, it is impractical to supplement the terrestrial network of terrestrial base stations 111, 121 solely by the communication satellites 131.

To solve these problems, as schematically shown in Figure 2, moving stations MS are preferably introduced to supplement the fixed communication cells FC provided by the fixed base stations FS. Examples of moving stations MS include a moving base station such as the communication satellite 131 that itself functions as a base station and something like a repeater that communicates with an existing fixed base station FS to expand an existing fixed communication cell FC (hereinafter referred to as a relay station). The moving station MS in the example in Figure 2 is an IAB (Integrated Access and Backhaul) node.

IAB is a technology specified in 5G to expand a communication cell of a parent node, utilizing wireless backhaul between a base station that serves as an IAB donor (parent node) and an IAB node (child node) and/or between parent and child IAB nodes (where an IAB node closer to the IAB donor is the parent node, and an IAB node far from the IAB donor is the child node). Here, "expansion of a communication cell" includes not only expanding the area covered by an existing communication cell, but also improving the communication quality of at least part of an existing communication cell. Furthermore, "expansion of the area covered by a communication cell" includes not only expanding the area in the horizontal plane of an existing communication cell, but also expanding an existing communication cell vertically, e.g. underground or to the upper and/or lower floors of a building.

In Figure 2, the moving station MS as the IAB node comprises a communication-device functional unit 34 that functions as a communication device for the parent node including fixed base station FS and a base-station functional unit 35 that functions as a base station for a communication device UE with which the moving station MS can communicate. In 5G, the communication-device functional unit 34 is specified as a MT (Mobile Termination) or IAB-MT, and the base-station functional unit 35 is specified as a DU (Distributed Unit) or IAB-DU. It should be noted that, in other wireless communication systems including generations after 5G, functions similar to IAB, MT, DU, CU (Central Unit described below) may be provided under different names, but such similar functions may be used as IAB, MT, DU, CU in the present embodiment.

Two fixed base stations FS1 and FS2 are illustrated in Figure 2. The first fixed base station FS1 provides the first fixed communication cell FC1 and the second fixed base station FS2 provides the second fixed communication cell FC2. In the example in Figure 2, the baseband function of each fixed base station FS1 and FS2 is divided into a central unit (CU) on the core network CN side and a distributed unit (DU) on the communication device UE side. The first distributed unit DU1 of the first fixed base station FS1 is provided near the radio equipment such as an antenna of the first fixed base station FS1, typically in the same base station facility as the radio equipment. The second distributed unit DU2 of the second fixed base station FS2 is provided near the radio equipment such as an antenna of the second fixed base station FS2, typically in the same base station facility as the radio equipment. Although the central unit CU in the example shown in the figure is shared by the first fixed base station FS1 (the first distributed unit DU1) and the second fixed base station FS2 (the second distributed unit DU2), separate central units may be provided for each of the fixed base stations FS1 and FS2. The central unit CU is connected to the core network CN. The connection between the radio equipment such as an antenna in each of the fixed base stations FS1, FS2 and each of the distributed units DU1, DU2, the connection between each of the distributed units DU1, DU2 and the central unit CU, and the connection between the central unit CU and the core network CN, are typically wired by conductors and/or optical fibers etc., although some or all of those connections may be wireless.

The communication-device functional unit 34 (IAB-MT) of the moving station MS, depending on the position of the moving station MS, can connect wirelessly with the distributed unit DU of either fixed base station FS. In the example in Figure 2, the communication-device functional unit 34 is connected wirelessly to the second distributed unit DU2 of the second fixed base station FS2. In this case, the moving station MS functions as a child node for the second fixed base station FS2 as a parent node or an IAB donor, and expands the second fixed communication cell FC2 by the second fixed base station FS2 as a parent node. Then, the basestation functional unit 35 (IAB-DU) of the moving station MS provides a moving communication cell as expanded communication cell of the second fixed communication cell FC2 to the communication device UE. In the example in Figure 2, two communication devices UE1 and UE2 connected to the basestation functional unit 35 of the moving station are shown schematically. The first communication device UE1 being inside the first fixed communication cell FC1 and outside the second fixed communication cell FC2, substantially communicates with the second fixed base station FS2 via the moving station MS.

The moving station MS is attached to a movable object, except when it can move (or fly) autonomously like the communications satellite 131. A movable object is any movable thing or person and includes, for example, automobiles, trains, motorcycles, bicycles, airplanes, ships, and any other vehicles. The moving station MS may be a communication device 2 used by a moving person, for example, a communication device 2 equipped with a tethering function and/or personal hotspot function. Since such a communication device 2 (moving station MS) usually functions as a wireless LAN access point, the RAT (e.g. 5G NR) used by the base station to be expanded (e.g. the second fixed base station FS2) and the RAT used by the expanding moving station MS may be different.

The inventor recognized the issue that moving stations MS can move between different emergency information distribution areas (EA1, EA2 described below), while fixed base stations FS1, FS2, which are stationarily installed on the ground, statically belong to specific emergency information distribution areas. As described below, in conventional wireless communication standards represented by 5G, emergency information distribution cannot be appropriately performed by such moving stations MS.

An emergency information distribution area is an area where emergency information concerning earthquake, tsunami and other disasters etc. is distributed simultaneously or broadcasted. A system that distributes emergency information is called a public warning system (PWS), and also an earthquake and tsunami warning system (ETWS) especially if it distributes warnings about disasters such as earthquakes and tsunamis. Emergency information distribution areas are generally set up in units of administrative divisions such as cities, wards, towns and villages. Each fixed base station FS1, FS2 stationarily installed on the ground belongs to the emergency information distribution area set up in the administrative division of the place where it is installed. In the example in Figure 2, the first fixed base station FS1 installed in the first administrative division belongs to the first emergency information distribution area EA1 set up in the first administrative division, and the second fixed base station FS2 installed in the second administrative division belongs to the second emergency information distribution area EA2 set up in the second administrative division.

The emergency information distribution system simultaneously distributes emergency information to all communication devices UE in the emergency information distribution area where disasters or other emergencies have occurred. Specifically, when a disaster etc. occurs in the first emergency information distribution area EA1, the first fixed base station FS1 belonging to the first emergency information distribution area EA1 simultaneously distributes emergency information to all communication devices UE in the first fixed communication cell FC1. Similarly, when a disaster etc. occurs in the second emergency information distribution area EA2, the second fixed base station FS2 belonging to the second emergency information distribution area EA2 simultaneously distributes emergency information to all communication devices UE in the second fixed communication cell FC2.

As such, the fixed base stations FS1, FS2 fixedly installed on the ground are fixedly associated with the specific emergency information distribution areas EA1, EA2, can appropriately perform emergency information distribution in each of the emergency information distribution areas EA1, EA2. On the other hand, the moving station MS can move among different emergency information distribution areas EA1 and EA2. Therefore, it is necessary to appropriately switch the emergency information distribution areas EA1 and EA2 for distributing emergency information depending on the location and/or the situation of the moving station MS. Thus, the main purpose of this embodiment is to provide a communication control apparatus 3 that can properly perform emergency information distribution by the moving station MS.

The communication control apparatus 3 comprises an emergency information distribution area estimation unit 31, an emergency information distribution control unit 32, an area placement information acquisition unit 33, a communication-device functional unit 34, a base-station functional unit 35, positioning unit 36, and a communication quality comparison unit 37. Some of these functional blocks can be omitted as long as the communication control apparatus 3 realizes at least some of the operations and/or effects described below. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in this embodiment, some or all of functional blocks of the communication control apparatus 3 may be realized in a centralized or distributed manner by computer and/or processor provided in the communication device UE, the moving station MS (including the movable object), the distributed unit DU1, DU2, the central unit CU, and the core network CN. In the example in Figure 2, the functional blocks 31-33 are provided in the central unit CU and the functional blocks 34-37 are provided in the moving station MS, but the locations where these functional blocks are provided are arbitrary, as long as the communication control apparatus 3 realizes at least some of the operations and/or effects described below.

The emergency information distribution area estimation unit 31 provided in the central unit CU estimates an emergency information distribution area where the moving station MS is located. The emergency information distribution control unit 32 provided in the central unit CU has the moving station MS distribute emergency information for the emergency information distribution area estimated by the emergency information distribution area estimation unit 31. If the emergency information distribution area estimation unit 31 estimates that the moving station MS is located in the first emergency information distribution area EA1, the emergency information distribution control unit 32 has the moving station MS distribute emergency information for the first emergency information distribution area EA1. If the emergency information distribution area estimation unit 31 estimates that the moving station MS is located in the second emergency information distribution area EA2, the emergency information distribution control unit 32 has the moving station MS distribute emergency information for the second emergency information distribution area EA2.

The method by which the emergency information distribution area estimation unit 31 estimates the emergency information distribution area in which the moving station MS is located is arbitrary, but some specific examples are shown below.

In the first example, the emergency information distribution area estimation unit 31 estimates that the moving station MS is located in the emergency information distribution area EA to which the fixed base station FS to which the moving station MS is connected belongs. In the example shown in Figure 2, as mentioned above, the communication-device functional unit 34 of the moving station MS is connected to the second distributed unit DU2 of the second fixed base station FS2. The fact that the moving station MS has been connected to the second fixed base station FS2 is notified from the communication-device functional unit 34 and/or the second distributed unit DU2 to the central unit CU and/or the core network CN, when the communication-device functional unit 34 (IAB-MT) is connected to the second distributed unit DU2, or when the communication-device functional unit 34 (IAB-MT) is handed over from another distributed unit (e.g. the first distributed unit DU1) to the second distributed unit DU2. This notification may include the cell identification information such as CGI (Cell Global Identity) of the second fixed communication cell FC2 to which the moving station MS is connected, and/or information of the tracking area (also called location registration area) to which the second fixed communication cell FC2 belongs. Thus, the emergency information distribution area estimation unit 31 provided in the central unit CU and/or the core network CN (hereinafter collectively referred to as the core network CN side), can recognize the fixed base station FS and/or the fixed communication cell FC to which the moving station MS is connected.

In the example in Figure 2, the emergency information distribution area estimation unit 31 estimates that the moving station MS is located in the second emergency information distribution area EA2 to which the second fixed base station FS2 to which the moving station MS is connected belongs. Then, the emergency information distribution control unit 32 has the base-station functional unit 35 of the moving station MS distribute emergency information for the second emergency information distribution area EA2. The emergency information distributed by the base-station functional unit 35 of the moving station MS is generated by the core network CN and/or the central unit CU, and distributed to the second distributed unit DU2 of the second fixed base station FS2. The emergency information is then distributed from the second distributed unit DU2 to the communication-device functional unit 34 of the moving station MS, and distributed to the communication device UE by the base-station functional unit 35 of the moving station MS. In this way, the moving station MS redistributes the emergency information obtained from the fixed base station FS by the communication-device functional unit 34 through the base-station functional unit 35.

In the second example, the emergency information distribution area estimation unit 31 estimates the emergency information distribution area EA where the moving station MS is located, based on the placement information of the emergency information distribution area EA acquired by the area placement information acquisition unit 33, and the position of the moving station MS measured by the positioning unit 36. The area placement information acquisition unit 33 acquires placement information, such as the coverage area and/or boundaries of each emergency information distribution area EA, from the core network CN side. The positioning unit 36 measures the position of the moving station MS based on, for example, a satellite positioning system such as GPS (Global Positioning System) and GNSS (Global Navigation Satellite System). The positioning unit 36 may be mounted on the moving station MS, on the movable object to which the moving station MS is attached, or on a communication device 2 or other devices carried by a person boarding the moving station MS. Furthermore, the positioning unit 36 may estimate or measure the position of the moving station MS, utilizing information collection and/or information analysis functions such as an NWDAF (Network Data Analytics Function) and/or an LMF (Location Management Function) of the core network CN, and/or various information that can be referenced in the application layer. By comparing the placement information of the emergency information distribution area EA obtained by the area placement information acquisition unit 33 and the position of the moving station MS measured by the positioning unit 36, the emergency information distribution area estimation unit 31 can estimate the emergency information distribution area EA in which the moving station MS is located.

In this example, it is assumed that the emergency information distribution area estimation unit 31 estimates that the moving station MS is located in the first emergency information distribution area EA1. Then, the emergency information distribution control unit 32 has the base-station functional unit 35 of the moving station MS distribute emergency information for the first emergency information distribution area EA1. At this time, as mentioned above, since the communication-device functional unit 34 of the moving station MS is connected to the second distributed unit DU2 of the second fixed base station FS2, the emergency information for the first emergency information distribution area EA1 generated on the core network CN side is distributed from the fixed base station (FS2) belonging to the different emergency information distribution area (EA2) to the moving station MS. In this way, the second fixed base station FS2 forwards the emergency information for the first emergency information distribution area EA1 to the moving station MS. However, since the second fixed base station FS2 itself belongs to the second emergency information distribution area EA2 different from the first emergency information distribution area EA1, it does not distribute this emergency information to communication devices UE. It should be noted that the first fixed base station FS1 belonging to the first emergency information distribution area EA1 distributes the emergency information to communication devices UE in the same manner as moving station MS. As described above, according to this example, the emergency information distribution control unit 32 can have the moving station MS distribute the emergency information acquired from the fixed station (FS2) to which the moving station MS is connected, for the emergency information distribution area (EA1) different from the emergency information distribution area (EA2) to which the fixed station (FS2) belongs.

In the third example, the emergency information distribution area estimation unit 31 estimates that the moving station MS is located in the emergency information distribution area EA to which the fixed base station FS with the highest communication quality for the moving station MS among the plurality of fixed base stations FS belongs. The communication quality of the plurality of fixed base stations FS around the moving station MS is measured and compared by the communication quality comparison unit 37 provided in the moving station MS and/or the movable object. Here, it is assumed that the communication quality comparison unit 37 determines that the communication quality for the moving station MS is the highest by the second fixed base stations FS2 among the shown two fixed base stations FS1 and FS2, and the emergency information distribution area estimation unit 31 estimates that the moving station MS is located in the second emergency information distribution area EA2 to which the second fixed base station FS2 belongs. Then, the emergency information distribution control unit 32 has the base-station functional unit 35 of the moving station MS distribute emergency information for the second emergency information distribution area EA2. The emergency information distributed by the base-station functional unit 35 of the moving station MS is generated on the core network CN side, and distributed to the second distributed unit DU2 of the second fixed base station FS2. The emergency information is then distributed from the second distributed unit DU2 to the communication-device functional unit 34 of the moving station MS, and distributed to the communication device UE by the base-station functional unit 35 of the moving station MS. In this way, the moving station MS redistributes the emergency information obtained from the fixed base station FS by the communication-device functional unit 34 through the basestation functional unit 35.

It should be noted that, when the emergency information distribution area estimation unit 31 estimates that the moving station MS is located in the second emergency information distribution area EA2 to which the second fixed base station FS2 belongs, the communication-device functional unit 34 of the moving station MS may be connected to the first distributed unit DU1 of the first fixed base station FS1. In this case, the emergency information for the second emergency information distribution area EA2 generated on the core network CN side is distributed from the fixed base station (FS1) belonging to the different emergency information distribution area (EA1) to the moving station MS. In this way, the first fixed base station FS1 forwards the emergency information for the second emergency information distribution area EA2 to the moving station MS. However, since the first fixed base station FS1 itself belongs to the first emergency information distribution area EA1 different from the second emergency information distribution area EA2, it does not distribute this emergency information to communication devices UE. It should be noted that the second fixed base station FS2 belonging to the second emergency information distribution area EA2 distributes the emergency information to communication devices UE in the same manner as moving station MS. As described above, according to this example, the emergency information distribution control unit 32 can have the moving station MS distribute the emergency information acquired from the fixed station (FS1) to which the moving station MS is connected, for the emergency information distribution area (EA2) different from the emergency information distribution area (EA1) to which the fixed station (FS1) belongs.

Figure 3 schematically shows an example utilizing a moving base station, such as the communication satellite 131 and an aircraft that itself functions as a base station, as a moving station MS. The moving base station MS is not limited to a flying non-terrestrial base station such as the communication satellite 131 and an aircraft, but may be a base station mounted on automobiles, trains, motorcycles, bicycles ships, and any other vehicles that can move on the ground surface. It should be noted that the position of the moving base station MS that can be measured by the positioning unit 36 means, for a ground moving base station that can move on the ground surface, the actual position of the ground moving base station on the ground surface, and for a non-terrestrial base station that can fly above the ground, the position of the representative point (typically the center) of the non-terrestrial communication cell (such as satellite communication cell 132) provided on the ground by the non-terrestrial base station.

The moving base station MS, which can communicate directly with the core network CN and the communication device UE, can be equipped with all the functional blocks of the communication control apparatus 3. Note that the communication-device functional unit 34 (IAB-MT) and the base-station functional unit 35 (IAB-DU), which were provided in Figure 2 to make the moving station MS function as an IAB node, are not necessary for the moving base station MS in Figure 3.

The emergency information distribution area estimation unit 31 may estimate the emergency information distribution area EA where the moving base station MS is located, based on the placement information of the emergency information distribution area EA acquired by the area placement information acquisition unit 33, and the position of the moving base station MS measured by the positioning unit 36. Besides, the emergency information distribution area estimation unit 31 may estimate that the moving base station MS is located in the emergency information distribution area EA to which the fixed base station FS with the highest communication quality measured by the communication quality comparison unit 37 among the plurality of fixed base stations FS belongs. The emergency information distribution control unit 32 has the moving base station MS distribute emergency information (generated by the core network CN and/or the moving base station MS) for the emergency information distribution area EA estimated by the emergency information distribution area estimation unit 31.

Figure 4 schematically shows an example utilizing a relay station RN such as a repeater that relays communication signal between the existing fixed base station FS and a communication device UE and expands the existing fixed communication cell FC, as a moving station MS. Note that the communication-device functional unit 34 (IAB-MT) and the base-station functional unit 35 (IAB-DU), which were provided in Figure 2 to make the moving station MS function as an IAB node, are not provided in the relay station RN in Figure 4. The relay station RN to which the function of the distributed unit (IAB-DU) is not provided, is difficult to be controlled individually and meticulously for the distribution of emergency information etc. from the core network CN side (the core network CN and/or the central unit CU) as in the example of Figure 2. For this reason, only the emergency information for the second emergency information distribution area EA2 to which the second fixed base station FS2 to which the relay station RN is connected belongs, is distributed to the relay station RN typically. In other words, unlike the example in Figure 2, the emergency information for the first emergency information distribution area EA1 to which the first fixed base station FS1, different from the second fixed base station FS2 to which the relay station RN is connected, belongs is not distributed to the relay station RN.

However, the emergency information distribution control unit 32 may determine whether or not to allow the relay station RN, which has received the emergency information for the second emergency information distribution area EA2 from the second fixed base station FS2, to redistribute this emergency information, according to the estimation result of the emergency information distribution area estimation unit 31. For example, if the emergency information distribution area estimation unit 31 estimates that the relay station RN is located in the first emergency information distribution area EA1, the emergency information distribution control unit 32 does not allow the relay station RN, which has received the emergency information for the second emergency information distribution area EA2 from the second fixed base station FS2, to redistribute this emergency information. It should be noted that some or all of the functional blocks such as the emergency information distribution area estimation unit 31, the emergency information distribution control unit 32, the area placement information acquisition unit 33 to control the emergency information distribution by the relay station RN, may be provided in the fixed base station (FS2) and/or the distributed unit (DU2) to which the relay station RN is connected, or in the relay station RN itself.

The present disclosure has been described above based on embodiments. It is understood by those skilled in the art that the embodiments are exemplary and that various variations are possible in the combination of each component and each process thereof, and that such variations are also within the scope of the present disclosure.

The functional configuration of each device described in the embodiment can be realized by hardware resources or software resources, or by the cooperation of hardware resources and software resources. As hardware resources, processors, ROM, RAM, and other LSIs can be used. Operating systems, applications, and other programs can be used as software resources.

1 wireless communication system, 2 communication device, 3 communication control apparatus, 11 5G wireless communication system, 12 4G wireless communication system, 13 satellite communication system, 31 emergency information distribution area estimation unit, 32 emergency information distribution control unit, 33 area placement information acquisition unit, 34 communication-device functional unit, 35 base-station functional unit, 36 positioning unit, 37 communication quality comparison unit.

## Claims

1. A communication control apparatus (3) for a wireless communication system that distributes emergency information, said system comprising first and second fixed base stations (FS1, FS2) that are fixedly associated with specific first and second emergency information distribution areas (EA1, EA2), further comprising a moving station (MS) which can move among different emergency information distribution areas (EA1, EA2) and communicates with an existing fixed base station (FS1, FS2) to expand an existing fixed communication cell, said communication control apparatus (3) comprising at least one processor that is configured to perform:
by an emergency information distribution area estimation unit (31), estimating an emergency information distribution area where a moving station capable of communicating with a communication device is located, wherein the moving station is estimated to be in the emergency information distribution area (EA1) different from the emergency information distribution area (EA2) to which the fixed base station (FS2), to which the moving station MS is currently connected, belongs; and
by an emergency information distribution control unit (32), having the moving station (MS) distribute emergency information for the estimated emergency information distribution area, wherein said communication control apparatus (3) is configured such that
the emergency information distribution control unit (32) is configured to have the moving station (MS) distribute the emergency information acquired from the fixed base station (FS2) to which the moving station MS is currently connected, for the emergency information distribution area (EA1) different from the emergency information distribution area (EA2) to which the fixed base station (FS2), to which the moving station MS is currently connected, belongs.

2. The communication control apparatus (3) according to claim 1, wherein
the moving station (MS) is connectable to a fixed base station (FS1, FS2) that statically belongs to a specific emergency information distribution area,
the communication control apparatus (3) comprises a communication quality comparison unit (37) comprised in the moving station (MS), that is configured to compare the communication quality of a plurality of adjacent fixed base stations, and
the emergency information distribution area estimation unit (31) is configured to estimate that the moving station (MS) is located in the emergency information distribution area (EA1) that is different from the emergency information distribution area (EA2) to which the fixed base station to which the moving station (MS) is currently connected belongs and to which the fixed base station (FS1, FS2) with the highest communication quality for the moving station (MS) among the plurality of fixed base stations (FS1, FS2) belongs.

3. The communication control apparatus (3) according to claim 1, wherein the emergency information distribution control unit (32) has the moving station (MS) distribute the emergency information acquired from the fixed base station (FS1, FS2) to which the moving station is currently connected.

4. The communication control apparatus (3) according to claim 3, wherein the emergency information distribution control unit (32) is configured to have the moving station (MS) distribute the emergency information, acquired by the moving station (MS) from the fixed base station (FS1, FS2) to which the moving station is currently connected, for the emergency information distribution area different from the emergency information distribution area to which such fixed base station (FS1, FS2) belongs.

5. The communication control apparatus (3) according to claim 3, wherein
the moving station (MS) comprises a communication-device functional unit that is configured to function as a communication device for the fixed base station (FS1, FS2) to which the moving station is currently connected and a basestation functional unit that functions as a base station for a communication device with which the moving station (MS) can communicate, and
the emergency information distribution control unit (32) is configured to have the base-station functional unit distribute the emergency information acquired by the communication-device functional unit from the fixed base station (FS1, FS2) to which the moving station is currently connected.

6. The communication control apparatus (3) according to claim 5, wherein
the moving station (MS) is an IAB, Integrated Access and Backhaul, node,
the communication-device functional unit is a MT, Mobile Termination, and
the base-station functional unit is a Distributed Unit DU.

7. The communication control apparatus (3) according to claim 1, wherein the moving station (MS) is a relay station that is configured to relay communication signal between the fixed base station (FS1, FS2) and a communication device.

8. The communication control apparatus (3) according to claim 1, wherein
the processor is configured to acquire placement information of the emergency information distribution area from core network side by an area placement information acquisition unit, and to measure the position of the moving station (MS) by a positioning unit (36), and
the emergency information distribution area estimation unit (31) is configured to estimate the emergency information distribution area where the moving station (MS) is located, based on the placement information of the emergency information distribution area and the position of the moving station (MS) measured by the positioning unit (36).

9. The communication control apparatus (3) according to claim 1, wherein
the moving station (MS) is a moving base station, and
the emergency information distribution control unit (32) is configured to have the moving base station distribute the emergency information acquired from core network side.

10. The communication control apparatus (3) according to claim 9 , wherein the moving base station is a flying non-terrestrial base station.

11. The communication control apparatus (3) according to claim 1, wherein the moving station (MS) is installed to a movable object.

12. A communication control method for a wireless communication system that distributes emergency information, said system comprising first and second fixed base stations (FS1, FS2) that are fixedly associated with specific first and second emergency information distribution areas (EA1, EA2), further comprising a moving station (MS) which can move among different emergency information distribution areas (EA1, EA2) and communicates with an existing fixed base station (FS1, FS2) to expand an existing fixed communication cell, said communication control method comprising:
estimating an emergency information distribution area where a moving station capable of communicating with a communication device is located, wherein the moving station is estimated to be in the emergency information distribution area (EA1) different from the emergency information distribution area (EA2) to which the fixed base station (FS2) , to which the moving station MS is currently connected, belongs; and
having the moving station (MS) distribute emergency information for the estimated emergency information distribution area, wherein said communication method comprises
having the moving station (MS) distribute the emergency information acquired from the fixed base station (FS2) to which the moving station MS is currently connected, for the emergency information distribution area (EA1) different from the emergency information distribution area (EA2) to which the fixed base station (FS2), to which the moving station MS is currently connected, belongs.

13. A computer-readable medium comprising instructions which, when executed by a communication control apparatus, cause the communication control apparatus to carry out the method of claim 12.

## Patentansprüche

1. Kommunikationssteuerungsvorrichtung (3) für ein Drahtloskommunikationssystem, das Notfallinformationen verteilt, wobei das System erste und zweite feste Basisstationen (FS1, FS2) umfasst, die fest spezifischen ersten und zweiten Notfallinformationsverteilungsbereichen (EA1, EA2) zugeordnet sind, ferner umfassend eine bewegliche Station (MS), die sich zwischen verschiedenen Notfallinformationsverteilungsbereichen (EA1, EA2) bewegen kann und mit einer existierenden festen Basisstation (FS1, FS2) kommuniziert, um eine existierende feste Kommunikationszelle zu erweitern, wobei die Kommunikationssteuerungsvorrichtung (3) mindestens einen Prozessor umfasst, der konfiguriert ist zum Ausführen von:
durch eine Notfallinformationsverteilungsbereich-Schätzeinheit (31), Schätzen eines Notfallinformationsverteilungsbereichs, in dem sich eine bewegliche Station, die zum Kommunizieren mit einer Kommunikationsvorrichtung fähig ist, befindet, wobei geschätzt wird, dass sich die bewegliche Station in dem Notfallinformationsverteilungsbereich (EA1) befindet, der von dem Notfallinformationsverteilungsbereich (EA2) verschieden ist, zu dem die feste Basisstation (FS2) gehört, mit der die bewegliche Station MS aktuell verbunden ist; und
durch eine Notfallinformationsverteilungs-Steuereinheit (32), Veranlassen der beweglichen Station (MS), Notfallinformationen für den geschätzten Notfallinformationsverteilungsbereich zu verteilen, wobei die Kommunikationssteuerungsvorrichtung (3) derart konfiguriert ist, dass
die Notfallinformationsverteilungs-Steuereinheit (32) konfiguriert ist, die bewegliche Station (MS) zu veranlassen, die von der festen Basisstation (FS2), mit der die bewegliche Station MS aktuell verbunden ist, erlangten Notfallinformationen für den Notfallinformationsverteilungsbereich (EA1) zu verteilen, der von dem Notfallinformationsverteilungsbereich (EA2) verschieden ist, zu dem die feste Basisstation (FS2) gehört, mit der die bewegliche Station MS aktuell verbunden ist.

2. Kommunikationssteuerungsvorrichtung (3) nach Anspruch 1, wobei
die bewegliche Station (MS) mit einer festen Basisstation (FS1, FS2) verbindbar ist, die statisch zu einem spezifischen Notfallinformationsverteilungsbereich gehört,
die Kommunikationssteuerungsvorrichtung (3) eine in der beweglichen Station (MS) enthaltene Kommunikationsqualitäts-Vergleichseinheit (37) umfasst, die konfiguriert ist, die Kommunikationsqualität einer Vielzahl von benachbarten festen Basisstationen zu vergleichen, und
die Notfallinformationsverteilungsbereich-Schätzeinheit (31) konfiguriert ist zu schätzen, dass sich die bewegliche Station (MS) in dem Notfallinformationsverteilungsbereich (EA1) befindet, der von dem Notfallinformationsverteilungsbereich (EA2) verschieden ist, zu dem die feste Basisstation gehört, mit der die bewegliche Station (MS) aktuell verbunden ist, und zu dem die feste Basisstation (FS1, FS2) mit der höchsten Kommunikationsqualität für die bewegliche Station (MS) unter der Vielzahl von festen Basisstationen (FS1, FS2) gehört.

3. Kommunikationssteuerungsvorrichtung (3) nach Anspruch 1, wobei die Notfallinformationsverteilungs-Steuereinheit (32) die bewegliche Station (MS) veranlasst, die von der festen Basisstation (FS1, FS2), mit der die bewegliche Station aktuell verbunden ist, erlangten Notfallinformationen zu verteilen.

4. Kommunikationssteuerungsvorrichtung (3) nach Anspruch 3, wobei die Notfallinformationsverteilungs-Steuereinheit (32) konfiguriert ist, die bewegliche Station (MS) zu veranlassen, die von der beweglichen Station (MS) von der festen Basisstation (FS1, FS2), mit der die bewegliche Station aktuell verbunden ist, erlangten Notfallinformationen für den Notfallinformationsverteilungsbereich zu verteilen, der von dem Notfallinformationsverteilungsbereich verschieden ist, zu dem eine solche feste Basisstation (FS1, FS2) gehört.

5. Kommunikationssteuerungsvorrichtung (3) nach Anspruch 3, wobei
die bewegliche Station (MS) eine Kommunikationsvorrichtungs-Funktionseinheit, die konfiguriert ist, als eine Kommunikationsvorrichtung für die feste Basisstation (FS1, FS2) zu fungieren, mit der die bewegliche Station aktuell verbunden ist, und eine Basisstations-Funktionseinheit umfasst, die als eine Basisstation für eine Kommunikationsvorrichtung fungiert, mit der die bewegliche Station (MS) kommunizieren kann, und
die Notfallinformationsverteilungs-Steuereinheit (32) konfiguriert ist, die Basisstations-Funktionseinheit zu veranlassen, die von der Kommunikationsvorrichtungs-Funktionseinheit von der festen Basisstation (FS1, FS2), mit der die bewegliche Station aktuell verbunden ist, erlangten Notfallinformationen zu verteilen.

6. Kommunikationssteuerungsvorrichtung (3) nach Anspruch 5, wobei
die bewegliche Station (MS) ein IAB-, Integrated Access and Backhaul,-Knoten ist,
die Kommunikationsvorrichtungs-Funktionseinheit eine MT, Mobile Termination, ist und
die Basisstations-Funktionseinheit eine Distributed Unit DU ist.

7. Kommunikationssteuerungsvorrichtung (3) nach Anspruch 1, wobei die bewegliche Station (MS) eine Relaisstation ist, die konfiguriert ist, ein Kommunikationssignal zwischen der festen Basisstation (FS1, FS2) und einer Kommunikationsvorrichtung weiterzuleiten.

8. Kommunikationssteuerungsvorrichtung (3) nach Anspruch 1, wobei
der Prozessor konfiguriert ist, Platzierungsinformationen des Notfallinformationsverteilungsbereichs von einer Kernnetzwerkseite durch eine Bereichsplatzierungsinformations-Erlangungseinheit zu erlangen und die Position der beweglichen Station (MS) durch eine Positionierungseinheit (36) zu messen, und
die Notfallinformationsverteilungsbereich-Schätzeinheit (31) konfiguriert ist, den Notfallinformationsverteilungsbereich, in dem sich die bewegliche Station (MS) befindet, basierend auf den Platzierungsinformationen des Notfallinformationsverteilungsbereichs und der durch die Positionierungseinheit (36) gemessenen Position der beweglichen Station (MS) zu schätzen.

9. Kommunikationssteuerungsvorrichtung (3) nach Anspruch 1, wobei
die bewegliche Station (MS) eine bewegliche Basisstation ist und
die Notfallinformationsverteilungs-Steuereinheit (32) konfiguriert ist, die bewegliche Basisstation zu veranlassen, die von der Kernnetzwerkseite erlangten Notfallinformationen zu verteilen.

10. Kommunikationssteuerungsvorrichtung (3) nach Anspruch 9, wobei die bewegliche Basisstation eine fliegende nicht-terrestrische Basisstation ist.

11. Kommunikationssteuerungsvorrichtung (3) nach Anspruch 1, wobei die bewegliche Station (MS) an einem beweglichen Objekt installiert ist.

12. Kommunikationssteuerungsverfahren für ein Drahtloskommunikationssystem, das Notfallinformationen verteilt, wobei das System erste und zweite feste Basisstationen (FS1, FS2) umfasst, die fest spezifischen ersten und zweiten Notfallinformationsverteilungsbereichen (EA1, EA2) zugeordnet sind, ferner umfassend eine bewegliche Station (MS), die sich zwischen verschiedenen Notfallinformationsverteilungsbereichen (EA1, EA2) bewegen kann und mit einer existierenden festen Basisstation (FS1, FS2) kommuniziert, um eine existierende feste Kommunikationszelle zu erweitern, wobei das Kommunikationssteuerungsverfahren umfasst:
Schätzen eines Notfallinformationsverteilungsbereichs, in dem sich eine bewegliche Station, die zum Kommunizieren mit einer Kommunikationsvorrichtung fähig ist, befindet, wobei geschätzt wird, dass sich die bewegliche Station in dem Notfallinformationsverteilungsbereich (EA1) befindet, der von dem Notfallinformationsverteilungsbereich (EA2) verschieden ist, zu dem die feste Basisstation (FS2) gehört, mit der die bewegliche Station MS aktuell verbunden ist; und
Veranlassen der beweglichen Station (MS), Notfallinformationen für den geschätzten Notfallinformationsverteilungsbereich zu verteilen, wobei das Kommunikationsverfahren umfasst
Veranlassen der beweglichen Station (MS), die von der festen Basisstation (FS2), mit der die bewegliche Station MS aktuell verbunden ist, erlangten Notfallinformationen für den Notfallinformationsverteilungsbereich (EA1) zu verteilen, der von dem Notfallinformationsverteilungsbereich (EA2) verschieden ist, zu dem die feste Basisstation (FS2) gehört, mit der die bewegliche Station MS aktuell verbunden ist.

13. Computerlesbares Medium, umfassend Anweisungen, die, wenn sie von einer Kommunikationssteuerungsvorrichtung ausgeführt werden, die Kommunikationssteuerungsvorrichtung veranlassen, das Verfahren nach Anspruch 12 auszuführen.

## Revendications

1. Appareil de commande de communication (3) pour un système de communication sans fil qui distribue des informations d'urgence, ledit système comprenant des première et deuxième stations de base fixes (FS1, FS2) qui sont associées de manière fixe à des première et deuxième zones de distribution d'informations d'urgence spécifiques (EA1, EA2), comprenant en outre une station mobile (MS) qui peut se déplacer parmi différentes zones de distribution d'informations d'urgence (EA1, EA2) et communique avec une station de base fixe existante (FS1, FS2) pour étendre une cellule de communication fixe existante, ledit appareil de commande de communication (3) comprenant au moins un processeur qui est configuré pour réaliser :
par une unité d'estimation de zone de distribution d'informations d'urgence (31), l'estimation d'une zone de distribution d'informations d'urgence où une station mobile capable de communiquer avec un dispositif de communication est située, dans lequel il est estimé que la station mobile se trouve dans la zone de distribution d'informations d'urgence (EA1) différente de la zone de distribution d'informations d'urgence (EA2) à laquelle appartient la station de base fixe (FS2) à laquelle la station mobile MS est actuellement connectée ; et
par une unité de commande de distribution d'informations d'urgence (32), le fait d'amener la station mobile (MS) à distribuer des informations d'urgence pour la zone de distribution d'informations d'urgence estimée, dans lequel ledit appareil de commande de communication (3) est configuré de telle sorte que
l'unité de commande de distribution d'informations d'urgence (32) est configurée pour amener la station mobile (MS) à distribuer les informations d'urgence acquises auprès de la station de base fixe (FS2) à laquelle la station mobile MS est actuellement connectée,
pour la zone de distribution d'informations d'urgence (EA1) différente de la zone de distribution d'informations d'urgence (EA2) à laquelle appartient la station de base fixe (FS2) à laquelle la station mobile MS est actuellement connectée.

2. Appareil de commande de communication (3) selon la revendication 1, dans lequel la station mobile (MS) peut être connectée à une station de base fixe (FS1,FS2) qui appartient statiquement à une zone de distribution d'informations d'urgence spécifique,
l'appareil de commande de communication (3) comprend une unité de comparaison de qualité de communication (37) comprise dans la station mobile (MS), qui est configurée pour comparer la qualité de communication d'une pluralité de stations de base fixes adjacentes, et
l'unité d'estimation de zone de distribution d'informations d'urgence (31)est configurée pour estimer que la station mobile (MS) est située dans la zone de distribution d'informations d'urgence (EA1) qui est différente de la zone de distribution d'informations d'urgence (EA2) à laquelle appartient la station de base fixe à laquelle la station mobile (MS) est actuellement connectée et à laquelle appartient la station de base fixe (FS1, FS2) ayant la qualité de communication la plus élevée pour la station mobile (MS) parmi la pluralité de stations de base fixes (FS1, FS2).

3. Appareil de commande de communication (3) selon la revendication 1, dans lequel l'unité de commande de distribution d'informations d'urgence (32) amène la station mobile (MS) à distribuer les informations d'urgence acquises auprès de la station de base fixe (FS1, FS2) à laquelle la station mobile est actuellement connectée.

4. Appareil de commande de communication (3) selon la revendication 3, dans lequel l'unité de commande de distribution d'informations d'urgence (32) est configurée pour amener la station mobile (MS) à distribuer les informations d'urgence, acquises par la station mobile (MS) auprès de la station de base fixe (FS1, FS2) à laquelle la station mobile est actuellement connectée, pour la zone de distribution d'informations d'urgence différente de la zone de distribution d'informations d'urgence à laquelle appartient une telle station de base fixe (FS1, FS2).

5. Appareil de commande de communication (3) selon la revendication 3, dans lequel
la station mobile (MS) comprend une unité fonctionnelle de dispositif de communication qui est configurée pour fonctionner comme un dispositif de communication pour la station de base fixe (FS1, FS2) à laquelle la station mobile est actuellement connectée et une unité fonctionnelle de station de base qui fonctionne comme une station de base pour un dispositif de communication avec lequel la station mobile (MS) peut communiquer, et
l'unité de commande de distribution d'informations d'urgence (32) est configurée pour amener l'unité fonctionnelle de station de base à distribuer les informations d'urgence acquises par l'unité fonctionnelle de dispositive de communication auprès de la station de base fixe (FS1, FS2) à laquelle la station mobile est actuellement connectée.

6. Appareil de commande de communication (3) selon la revendication 5, dans lequel
la station mobile (MS) est un nœud IAB, Integrated Access and Backhaul,
l'unité fonctionnelle de dispositif de communication est une MT, Mobile Termination, et
l'unité fonctionnelle de station de base est une Unité Distribuée DU.

7. Appareil de commande de communication (3) selon la revendication 1, dans lequel la station mobile (MS) est une station relais qui est configure pour relayer un signal de communication entre la station de base fixe (FS1, FS2) et un dispositif de communication.

8. Appareil de commande de communication (3) selon la revendication 1, dans lequel
le processeur est configuré pour acquérir des informations de placement de la zone de distribution d'informations d'urgence depuis le côté réseau central par une unité d'acquisition d'informations de placement de zone, et pour mesurer la position de la station mobile (MS) par une unité de positionnement (36), et
l'unité d'estimation de zone de distribution d'informations d'urgence (31) est configurée pour estimer la zone de distribution d'informations d'urgence où la station mobile (MS) est située, sur la base des informations de placement de la zone de distribution d'informations d'urgence et de la position de la station mobile (MS) mesurée par l'unité de positionnement (36).

9. Appareil de commande de communication (3) selon la revendication 1, dans lequel
la station mobile (MS) est une station de base mobile, et
l'unité de commande de distribution d'informations d'urgence (32) est configurée pour amener la station de base mobile à distribuer les informations d'urgence acquises depuis le côté réseau central.

10. Appareil de commande de communication (3) selon la revendication 9, dans lequel la station de base mobile est une station de base non Terrestre volante.

11. Appareil de commande de communication (3) selon la revendication 1, dans lequel la station mobile (MS) est installée sur un objet mobile.

12. Procédé de commande de communication pour un système de communication sans fil qui distribue des informations d'urgence, ledit système comprenant des première et deuxième stations de base fixes (FS1, FS2) qui sont associées de manière fixe à des première et deuxième zones de distribution d'informations d'urgence spécifiques (EA1, EA2), comprenant en outre une station mobile (MS) qui peut se déplacer parmi différentes zones de distribution d'informations d'urgence (EA1, EA2) et communique avec une station de base fixe existante (FS1, FS2) pour étendre une cellule de communication fixe existante, ledit procédé de commande de communication comprenant :
l'estimation d'une zone de distribution d'informations d'urgence où une station mobile capable de communiquer avec un dispositif de communication est située, dans laquelle il est estimé que la station mobile se trouve dans la zone de distribution d'informations d'urgence (EA1) différente de la zone de distribution d'informations d'urgence (EA2) à laquelle appartient la station de base fixe (FS2) à laquelle la station mobile MS est actuellement connectée ; et
le fait d'amener la station mobile (MS) à distribuer des informations d'urgence pour la zone de distribution d'informations d'urgence estimée, dans lequel ledit procédé de communication comprend
le fait d'amener la station mobile (MS) à distribuer les informations d'urgence acquises auprès de la station de base fixe (FS2) à laquelle la station mobile MS est actuellement connectée, pour la zone de distribution d'informations d'urgence (EA1) différente de la zone de distribution d'informations d'urgence (EA2) à laquelle appartient la station de base fixe (FS2) à laquelle la station mobile MS est actuellement connectée.

13. Support lisible par ordinateur comprenant des instructions qui, lorsqu'elles sont exécutées par un appareil de commande de communication, amènent l'appareil de commande de communication à mettre en œuvre le proceed de la revendication 12.
